(19) Europäisches Patentamt
European Patent Office
Office européen des brevets

(11) **EP 0 380 002 B2**

(12) **NEW EUROPEAN PATENT SPECIFICATION**

(45) Date of publication and mention
of the opposition decision:
**29.01.2003 Bulletin 2003/05**

(45) Mention of the grant of the patent:
**02.11.1994 Bulletin 1994/44**

(21) Application number: **90101133.8**

(22) Date of filing: **20.01.1990**

(51) Int Cl.⁷: **G11B 7/24**

(54) **Optical disk substrate and optical information-storage medium**

Träger für optische Scheibe und Medium für optische Informationsspeicherung

Substrat pour disque optique et milieu de mémoire d'information optique

(84) Designated Contracting States:
**BE CH DE FR GB IT LI NL SE**

(30) Priority: **25.01.1989 JP 1407989**

(43) Date of publication of application:
**01.08.1990 Bulletin 1990/31**

(73) Proprietor: **IDEMITSU PETROCHEMICAL CO., LTD.**
**Tokyo 108-0014 (JP)**

(72) Inventors:
• **Sakoda, Atsunobu**
**Sodegaura-cho, Kimitsu-gun, Chiba-ken (JP)**
• **Uchiyama, Katsumi**
**Sodegaura-cho, Kimitsu-gun, Chiba-ken (JP)**
• **Fujishima, Toshihiko**
**Sodegaura-cho, Kimitsu-gun, Chiba-ken (JP)**

(74) Representative:
**Gille Hrabal Struck Neidlein Prop Roos**
**Patentanwälte**
**Brucknerstrasse 20**
**40593 Düsseldorf (DE)**

(56) References cited:
**EP-A- 0 205 192      EP-A- 0 293 769**
**EP-A- 0 293 769      EP-A- 0 300 485**
**EP-A- 0 379 130      DE-A- 3 301 963**
**DE-A- 3 734 681      FR-A- 2 605 134**

• **PATENT ABSTRACTS OF JAPAN vol. 13, no. 73 (P-830)(3421) 20 February 1989,& JP-A-63 257933**
• **PATENT ABSTRACTS OF JAPAN vol. 11, no. 239 (P-602)(686) 06 August 1987, & JP-A-62 50801**
• **Plastics 85, proceedings of the SPE 43rd annual technical conference and exhibition, 1985, "Polycarbonate Resins for Optical Memories and Compact Disks" by R.Ries and H.Loewer**
• **Decision T 205/83**
• **Kunststoffe 76 (1986) 10, pages 917 to 919, "Polycarbonate - ein Werkstoff für optische Speichermedien", by W. Siebourg**

EP 0 380 002 B2

**Description**

The present invention relates to an optical disk substrate formed from a polycarbonate resin which may contain additives and, more specifically to an optical disk substrate which maintains a high reliability for a long term, and an optical information storage medium including the disk substrate.

Polycarbonate resins are widely used as a substrate for an optical information storage medium, such as an audio-disk, a laser disk, an optical disk memory, and a magneto-optical disk, from which information may be read out, written to and/or rewritten, by utilizing laser beams, because the polycarbonate resins have an excellent moldability, strength, light transmissibility and moisture resistance. Nevertheless, although the polycarbonate resins exhibit such exellent properties, they have disadvantages in that they are easily hydrolyzed under an elevated temperature and a high humidity, which results in lowering of the molecular weight and the impact strength thereof.

Optical disk substrates and the optical information-storage media prepared from such polycarbonate resins must be able to maintain a high reliability for a long time (e.g. 10 years or more), but it is difficult to meet this requirement, because of a rapid deterioration of the polycarbonate resins by hydrolysis under an elevated temperature and high humidity.

Various attempts to improve a corrosion resistance of an information-storage medium made of polycarbonate resins have been proposed. For example, JP-A-63-97627 discloses a reduction of the amount of the remaining chlorine to 1 ppm or less, and JP-A-63-257933 discloses a reduction of the amount of phosphorus to 5-10 ppm.

The techniques disclosed in the above publications can prevent a corrosion deterioration of the information recording layer to some extent, but these techniques are not relevant to the deterioration of the polycarbonate resin per se.

After conducting various research projects to remedy the above disadvantages, the inventors of the present invention found that the hydrolysis of polycarbonate resins is caused by an interaction between trace amounts of metals (notably, specific metals as listed hereinafter) remaining therein, and trace amounts of solvents (notably, chlorinated compound solvents) remaining therein.

Accordingly, the object of the present invention is to provide an optical disk substrate, and an optical information-storage medium prepared therefrom, which maintain a high reliability for a long time by efficiently inhibiting the deterioration of the polycarbonate resin.

Other objects and advantages of the present invention will be apparent from the following description.

In accordance with the present invention, this object is accomplished by means of an optical disk substrate formed from a polycarbonate resin being characterized by having a viscosity-average molecular weight of 10000 to 22000 and that each metal belonging to the IA-Group and the VIII-group of the Periodic Table - if present in said polycarbonate resin - does not exist in an amount of more than 1 ppm. In the optical disk substrate according to the present invention at the same time, chlorinated compound solvents (as a whole) preferably do not exist in an amount of more than 10 ppm.

Further, in accordance with the present invention, the above object is accomplished by means of an optical information-storage medium, comprising an optical information-recording layer formed on the above-mentioned optical disk substrate.

The metals belonging to the IA group of the Periodic Table are lithium (Li), sodium (Na), potassium (K), rubidium (Rb), cesium (Cs) and francium (Fr), particularly, sodium (Na) and potassium (K), and the metals belonging to the VIII group of the Periodic Table are iron (Fe), cobalt (Co), nickel (Ni), ruthenium (Ru), rhodium (Rh), palladium (Pd), osmium (Os), iridium (Ir) and platinum (Pt), particularly, iron (Fe), cobalt (Co), or nickel (Ni).

Further, the chlorinated compound solvent is typically a hydrocarbon halide or a carbon halide, such as chloromethane, dichloromethane, trichloromethane, or tetrachloromethane.

The invention will be further explained with reference to the enclosed drawings.

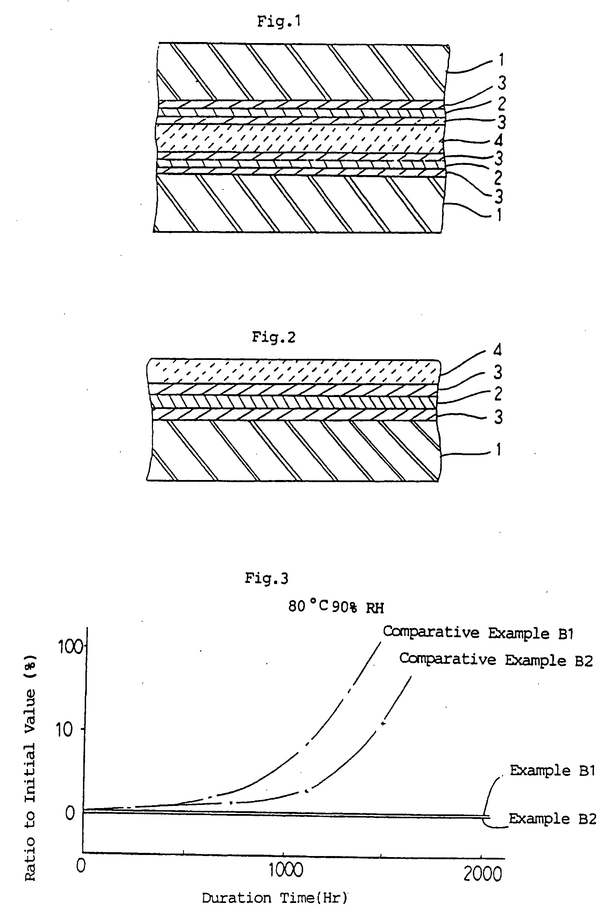

Figures 1 and 2 are sectional views schematically illustrating structures of embodiments of optical information-storage mediums according to the present invention, and Figure 3 is a graph showing a change in a bit error ratio of an optical information-storage medium of the present invention or of a comparative Example.

The polycarbonate resin which may be used for the optical disk substrate of the present invention has a viscosity-average molecular weight of 10000 to 22000, preferably 12000 to 20000 and may be prepared by reacting a dihydric phenol and a carbonate, such as phosgene or diphenyl carbonate may be used. As dihydric phenol, there can be mentioned hydroquinone, 4,4'-dioxyphenyl, bis(hydroxyphenyl)alkane, bis(hydroxyphenyl)cycloalkane, bis(hydroxyphenyl)ether, bis(hydroxyphenyl)ketone, bis(hydroxyphenyl)sulfide, or bis(hydroxyphenyl)sulfone, and the lower-alkyl- or halogen-substituted derivatives thereof. Preferably, 2,2'-bis(4-hydroxyphenyl)propane (hereinafter referred to as bisphenol A), 1,1-bis(4-hydroxyphenyl)ethane and 2,2-bis(4-hydroxyphenyl)-hexafluoropropane are used. The above dihydric phenol may be used alone or in a combination thereof.

Further, a polycarbonate partially having branched chains may be used in the present invention.

The viscosity-average molecular weight of 10000 to 22000 can be controlled by adding an end-capping agent, such as p-t-butylphenol, during a step of manufacturing the polycarbonate. If the viscosity-average molecular weight is less than 10000, a strength of the optical disk substrate becomes too low to withstand practical use, and if the viscosity-average molecular weight is beyond 22000, an optical disk substrate having a good moldability and optical properties cannot be obtained.

The viscosity-average molecular weight [Mv] can be calculated by determining a specific viscosity $[\eta_{sp}]$ of a solution of polycarbonate in dichloromethane at 20°C, and using the following equations,

$$\eta_{sp}/C = [\eta] (1 + 0.28\, \eta_{sp})$$

wherein C denotes a concentration (g/l) of the polycarbonate resin, and

$$[\eta] = 1.23 \times 10^{-5} Mv^{0.83}.$$

After the polycarbonate resin for use in a subsequent injection molding is prepared in accordance with a conventional known process, preferably the solution thereof is washed repeatedly with an acid and alkaline solution, and water, and filtered, or alternatively, the granulates thereof are washed with a poor solvent, such as acetone, while heated, to remove impurities or foreign substances, such as, low-molecular weight compounds, unreacted compounds, metallic components. The amounts of foreign substances, impurities and solvents contained in the raw material for injection molding should be as low as possible.

If necessary, the raw material may contain additives, such as an antioxidant, e.g., phosphorus derivatives.

When the above-mentioned polycarbonate resin is used as the raw resin for the optical disk substrate, a resin having a foreign-substances index of, generally 30000 $\mu m^2$/g or less, preferably 15000 $\mu m^2$/g or less, is used. During the injection molding, a temperature of the resin is 300 to 400°C, and a temperature of the mold is generally 50 to 140°C, preferably 80 to 130°C. Further, preferably the selection of the material is such that an inclusion of metallic components is minimized during the injection molding. The surface temperature of the mold alone can be made higher than a glass transition temperature of the resin, preferably using a high frequency and after injecting the resin, the temperature of the resin may be cooled to a temperature at which the disk substrate can be taken out. This process results in a substrate having improved optical properties.

The term "foreign-substances index" used herein means a sum of a product of (i) a square of a particle diameter and (ii) the number, of each foreign substance (having a particle diameter of 0.5 $\mu m$ or more) per unit weight. The foreign-substances are detected in a solution prepared by dissolving in an excess amount of an organic solvent (particularly, methylene chloride) a material (e.g., a raw material or a substrate) to be evaluated. The index is calculated from the equation,

$$I = \Sigma\ \{[\tfrac{1}{2}(d_{i+1} + d_i)]^2 \times (n_i - n_{i'})\}/W,$$

wherein I denotes the foreign-substances index, $d_i$ denotes an i-th numerical value ($\mu m$) for dividing a range of the particle diameter, and $n_i$ denotes the number of foreign substances having a particle diameter of less than $d_{i+1}$ and not less than $d_i$, and detected in the solvent, $n_i'$ denotes the number of foreign substances involved in the solvent before use, and W demotes the weight (g) of a material. An example of the numerical values for dividing the range of the particle diameter is as follows:

| | |
|---|---|
| $d_1$ = 0.5 $\mu m$ | $d_2$ = 0.6 $\mu m$ |
| $d_3$ = 0.7 $\mu m$ | $d_4$ = 1.1 $\mu m$ |
| $d_5$ = 2.5 $\mu m$ | $d_6$ = 5.0 $\mu m$ |
| $d_7$ = 10.0 $\mu m$ | $d_8$ = 20.0 $\mu m$ |
| $d_9$ = 25.0 $\mu m$. | |

If foreign substances having a diameter of more than 25.0 $\mu m$ are detected, $d_{10}$, $d_{11}$, and so on having an appropriate numerical value are used.

In the optical disk substrate produced as above, any metals belonging to the IA group and the VIII group, and remaining in the substrate, should be present in an amount of not more than 1 ppm, individually and respectively. Preferably, a content of all of the metals belonging to the IA group and the VIII group, and remaining in the substrate, should be not more than 1 ppm.

Experiments conducted by the inventors of the present invention showed that the presence of the remaining metals belonging to the IA group and the VIII group, particularly iron (Fe) or sodium (Na), in an amount of more than 1 ppm, causes a rapid deterioration of the polycarbonate resin. The amount of the remaining chlorinated compound solvents (as a whole) is preferably not more than 10 ppm, more preferably not more than 6 ppm.

According to the experiments of the present inventors, it was found that, when a metal such as iron or sodium, remains in an amount beyond 1 ppm, and at the same time, the chlorinated compound solvents, such as chloromethane, dichloromethane, trichloromethane, tetrachloromethane, or dichloroethane, remain in an amount beyond 10 ppm, an interaction between the metal and the solvents occurs, and accelerates the deterioration of the polycarbonate resin.

To ensure that no metals belonging to the IA group and the VIII group remain in the polycarbonate resin in an amount of more than 1 ppm, an incorporation of the metals into the resin should be prevented, during the manufacturing step thereof. For example, the metals should not be used for a manufacturing apparatus or piping.

To ensure that the amount of each remaining metal is less than 1 ppm, a solution (in dichloromethane) of the polycarbonate resin after polymerization should be thoroughly washed with an alkaline and acid solution, and water with a high purity. Further, to ensure that the amount of the remaining chlorinated compound solvents is less than 10 ppm, the polycarbonate resin should be granulated, and then, thoroughly washed with a poor solvent (e.g., acetone) to remove the chlorinated compound solvents, such as dichloromethane, and further, thoroughly dried.

Apart from the metals belonging to the IA group and the VIII group, preferably no metals belonging to the IIA group, the IIIA group, and the IVA group, such as aluminum (Al), silicon (Si), calcium (Ca) or magnesium (Mg) remain in an amount of more than 1 ppm, respectively.

The optical information-storage medium according to the present invention will be described hereinafter with respect to embodiments illustrated in Figures 1 and 2.

Figure 1 shows an optical information-storage medium carrying an information-recording layer formed between two disk substrates, and Fig. 2 shows an optical information-storage medium carrying an optical information-recording layer formed on a surface of the disk substrate.

The optical information-storage medium according to the present invention has the same structure as that of a conventional information-storage medium, except that the information-storage medium includes the optical substrate according to the present invention.

In Figures 1 and 2, an optical disk substrate 1 is formed from a polycarbonate resin, and an information-recording layer 2 is formed thereon by evaporating or spattering a combined material of a transition metal (e.g., iron or cobalt) and a rare earth element [e.g., terbium (Tb), gadolinium (Gd), neodymium (Nd) or dysprosium (Dy)]. Both sides of the recording layer 2 are protected by two protective layers 3, respectively. The protective layer 3 is preferably prepared from silicone ceramics. An overcoat layer 4 (Fig. 2) or an adhesive layer 4 (Fig. 1) is preferably made from an ultraviolet-curable resin.

The optical information-storage medium carrying the information-recording layer formed on the optical disk substrate, as above, can be used as a write-once or rewritable medium.

Examples

The present invention now will be further illustrated by, but is no means limited to, the following Examples.

Example A

Optical disk substrates according to the present invention (Examples A1, A2 and A3) and those prepared for comparison (Comparative Examples A1 and A2) were compared.

As shown in Table 1, five polycarbonate pellets were prepared, under various production and treatment conditions. The polycarbonate resins had an viscosity-average molecular weight (Mv) of about 14,000 to 15,000. An amount of remaining metals (Na and Fe) was measured by an atomic-absorption spectroscopy, and an amount of a remaining solvent (dichloromethane) by a gas chromatography.

The above polycarbonate pellets were molded by an injection molding (molding temperature = 360°C; mold temperature = 120°C) to obtain optical disk substrates (diameter = 130 mm; thickness = 1.2 mm).

An accelerated deterioration test was carried out by putting the substrates into a constant temperature-humidity chamber (80°C and 90%RH). Samples were taken out periodically and the appearance thereof examined, and further, the molecular weights thereof were measured. The results are shown in Table 1.

## Table 1

|  | Mv | PC substrate (initial) | | |
|  |  | Na (ppm) | Fe (ppm) | CH2Cl2 (ppm) |
|---|---|---|---|---|
| Example A1 | 14,200 | 0.3 | 0.2 | 3 |
| Example A2 | 14,300 | 0.2 | 0.1 | 2 |
| Example A3 | 14,400 | 0.2 | 0.1 | 10 |
| Com.Exa.A1 | 14,400 | 1.4 | 0.4 | 10 |
| Com.Exa.A2 | 14,300 | 1.5 | 1.5 | 15 |

## Table 1 (continued)

|  | At 80°C & 90%RH for | | | |
|  | 1000 Hr. | | 2000 Hr. | |
|  | Mv | AP | Mv | AP |
|---|---|---|---|---|
| Example A1 | 14,000 | G | 13,900 | G |
| Example A2 | 14,200 | G | 14,000 | G |
| Example A3 | 13,900 | G | 13,800 | W |
| Com.Exa.A1 | 13,400 | W | 13,200 | W |
| Com.Exa.A2 | 13,100 | W | 12,900 | W |

PC = polycarbonate;

Mv = viscosity-average molecular weight;

Com.Exa. = Comparative Example

AP = appearance;  G = good; and W = slightly whitened.

Example B

The optical disk substrates prepared in Example A (i. e., Examples A1 and A2 of the present invention, and Comparative Examples A1 and A2) were used to obtain optical information-storage mediums of Example B, i.e., Examples B1 and B2 of the present invention, and Comparative Examples B1 and B2, respectively.

These storage mediums had a structure as illustrated in Fig. 2, wherein a Tb-Fe-Co recording layer (800 Å); SiN protective layer (800Å), and an overcoat layer (ultraviolet-curable resin: 10μm) were formed on each substrate.

A change of the bit error ratio of each of the four storage media was determined by OMS-1000 (Nakamichi Co., Ltd.). The results are shown in Figure 3.

Although the present invention has been described with reference to specific embodiments, various changes and modifications obvious to those skilled in the art are deemed to be within the scope of the appended claims.

**Claims**

1.   An optical disk substrate formed from a polycarbonate resin which may contain additives, said polycarbonate resin being **characterized by** having a viscosity-average molecular weight of 10000 to 22000 and that each metal belonging to the IA-group and the VIII-group of the Periodic Table - if present in said polycarbonate resin - does not exist in an amount of more than 1 ppm, containing a maximum of 10 ppm of a chlorinated compound solvent, and foreign-substances, the foreign-substances index being generally 30 000 $\mu m^2$/g or less, said index being calculated from the following equation:

$$I = \Sigma \{[\frac{1}{2}(d_{i+1} + d_i)]^2 \times (n_i - n_{i'})\}/W,$$

wherein I denotes the foreign-substances index, $d_i$ denotes an i-th numerical value ($\mu m$) for dividing a range of the particle diameter, and $n_i$ denotes the number of foreign-substances having a particle diameter of less than $d_{i+1}$ and not less than di, and detected in the solvent, $n_{i'}$ denotes the number of foreign-substances involved in the solvent before use, and W denotes the weight (g) of a material.

2. An optical disk substrate according to claim 1, wherein the metal belonging to the group IA is sodium or potassium.

3. An optical disk substrate according to claim 1, wherein the metal belonging to the group VIII is iron, nickel or cobalt.

4. An optical disk substrate according to claim 1, wherein the chlorinated compound solvent is dichloromethane.

5. An optical information-storage medium, comprising an optical recording layer formed on the optical disk substrate according to any one of claims 1 to 4.

**Patentansprüche**

1. Optisches Scheibensubstrat, gebildet aus einem Polycarbonatharz, das Additive enthalten kann, wobei das genannte Polycarbonatharz **gekennzeichnet ist durch** ein viskositätsmittleres Molekulargewicht von 10 000 bis 22 000 und **dadurch**, dass jedes Metall, dass zu der Gruppe IA und der Gruppe VIII des Periodensystems gehört - falls in dem genannten Polycarbonatharz vorhanden - nicht in einer Menge von mehr als 1 ppm vorliegt, maximal 10 ppm einer chlorierten Lösungsmittelverbindung, und Fremdstoffe enthält, wobei der Fremdstoffindex im allgemeinen 30 000 $\mu m^2$/g oder weniger beträgt, wobei der genannte Index aus folgender Gleichung berechnet wird:

$$I = \Sigma \{[\frac{1}{2}(d_{i+1} + d_i)]^2 \times (n_i - n_{i'})\}/W,$$

worin 1 den Fremdstoffindex bezeichnet, wobei $d_i$ den i-ten numerischen Wert ($\mu m$) zum Unterteilen eines Bereichs der Partikeldurchmesser bezeichnet und $n_i$ die Anzahl der Fremdstoffe bezeichnet, die einen Partikeldurchmesser von weniger als $d_{i+1}$ und nicht weniger $d_i$ besitzen und In dem Lösungsmittel detektiert werden, $n_{i'}$ die Anzahl der Fremdstoffe bezeichnet, die in dem Lösungsmittel vor der Benutzung vorhanden sind, und W das Gewicht (g) des Materials bezeichnet.

2. Optisches Scheibensubstrat nach Anspruch 1, worin das Metall, dass zur Gruppe IA des Periodensystems gehört, Natrium oder Kalium ist.

3. Optisches Scheibensubstrat nach Anspruch 1, worin das Metall, dass zur Gruppe VIII des Periodensystems gehört, Eisen, Nickel oder Cobalt ist.

4. Optisches Scheibensubstrat nach Anspruch 1, worin die chlorierte Lösungsmittelverbindung Dichlormethan ist.

5. Optisches Informationsspeichermedium, das eine optische Aufzeichnungsschicht auf dem optischen Scheibensubstrat nach einem der Ansprüche 1 bis 4 umfasst.

**Revendications**

1. Support pour disque optique formé à partir d'une résine de polycarbonate qui peut contenir des additifs, ladite résine de polycarbonate étant **caractérisée en ce qu'**elle a une masse moléculaire moyenne déterminée par la

EP 0 380 002 B2

viscosité de 10 000 à 22 000, et **en ce que** la quantité de chacun des métaux appartenant au groupe IA et au groupe VIII de la Classification Périodique, s'il est présent dans ladite résine de polycarbonate, ne dépasse pas 1 ppm, et **en ce qu'**elle contient au maximum 10 ppm d'un solvant constitué par un solvant chloré et des substances étrangères, l'indice de substances étrangères étant en général de 30 000 $\mu m^2$/g ou moins, ledit indice étant calculé à partir de l'équation suivante :

$$I = \Sigma \{(\tfrac{1}{2}(d_{i+1} + d_i]^2 \times (n_i - n_i')\}/W,$$

dans laquelle I représente l'indice de substances étrangères, $d_i$ représente la ième valeur numérique ($\mu m$) utilisée pour diviser l'intervalle granulométrique, et $n_i$ représente le nombre de substances étrangères ayant des particules d'un diamètre inférieur à $d_{i+1}$ et non inférieur à $d_i$ et détectées dans le solvant, $n_i'$ représente le nombre de substances étrangères dans le solvant avant utilisation, et W est la masse de la matière en grammes.

2. Support pour disque optique selon la revendication 1, dans lequel le métal appartenant au groupe IA est le sodium ou le potassium.

3. Support pour disque optique selon la revendication 1, dans lequel le métal appartenant an groupe VIII est le fer, le nickel ou le cobalt.

4. Support pour disque optique selon la revendication 1, dans lequel le solvant chloré est le dichlorométhane.

5. Milieu de stockage d'informations optiques, comprenant une couche d'enregistrement optique formée sur le support pour disque optique selon l'une quelconque des revendications 1 à 4.

## Fig.1

## Fig.2

## Fig.3

80°C 90% RH

Comparative Example B1

Comparative Example B2

Example B1

Example B2

Ratio to Initial Value (%)

Duration Time(Hr)